Europäisches Patentamt

European Patent Office

Office européen des brevets

(11) Publication number: **0 283 603 B1**

(12) # EUROPEAN PATENT SPECIFICATION

(45) Date of publication of patent specification: **16.10.91** (51) Int. Cl.⁵: **B01J 29/38, C10G 35/095**

(21) Application number: **87302497.0**

(22) Date of filing: **24.03.87**

(54) Redispersion of agglomerated noble metals on zeolite catalysts.

(43) Date of publication of application:
**28.09.88 Bulletin 88/39**

(45) Publication of the grant of the patent:
**16.10.91 Bulletin 91/42**

(84) Designated Contracting States:
**BE DE FR GB IT NL SE**

(56) References cited:
**EP-A- 0 093 621          EP-A- 0 142 352
FR-A- 2 234 038          FR-A- 2 240 946
US-A- 4 094 814          US-A- 4 107 032**

(73) Proprietor: **MOBIL OIL CORPORATION
150 East 42nd Street
New York New York 10017(US)**

(72) Inventor: **Borghard, William Stern
1355 Knox Drive
Yardley Pennsylvania 19067(US)**
Inventor: **Huang, Tracy Jau-Hua
9 Woodfield Lane
Lawrenceville New Jersey 08648(US)**
Inventor: **McCullen, Sharon Brawner
119 Colonial Drive
Newton Pennsylvania 18940(US)**
Inventor: **Schoennagel, Hans Juergen
85 West Shore Drive
Pennington New Jersey 08534(US)**
Inventor: **Tsao, Ying-Yen Peter
122 Dilworth Lane
Longhorne Pennsylvania 19047(US)**
Inventor: **Wong, Stephen Sui Fai
3 Carrol Joy Road
Medford New Jersey(US)**

(74) Representative: **Cooper, John Anthony et al
Mobil Court 3 Clements Inn
London WC2A 2EB(GB)**

**Description**

This invention relates to reactivating catalysts.

Reactivation of platinum reforming catalysts is well known. Chlorine and oxygen catalyst reactivation is well-known.

U.S. Patent No. 2,906,702 discloses restoring Pt-alumina reforming catalyst. The deactivated catalyst contacts gaseous chlorine, fluorine, or other halogen or halogen-affording substance at high temperature.

U.S. Patent No. 3,134,732 describes reactivating noble metal catalyst supported on alumina by contact with halogen-containing gas, stripping excess halogen and reducing with hydrogen. The agglomerated metal was on the alumina as small crystallites.

It is also known to regenerate zeolite catalysts containing platinum group metal. The metal must be redispersed within the zeolite pores. In U.S. Patent No. 3,986,982 a deactivated platinum group metal-loaded zeolite contacts a stream of inert gas containing 0.5 to 20 volume % free oxygen and 5 to 500 ppm volume chlorine, HCl, or organic chlorine-containing material. The catalyst is then purged and reduced in hydrogen at $200°$ to $600°$ C.

Regeneration of highly siliceous materials which contain noble metals is difficult. Treatment of agglomerated platinum on silica with chlorine compounds, water and oxygen in an inert gas results in a large loss of platinum from the silica support. The process of U.S. 3,986,982, described above, has not been found suitable for regeneration of highly siliceous zeolites, those having a framework silica to alumina ratio over 20.

A way has now been discovered to rejuvenate high silica zeolites with deactivated noble metals.

Accordingly, the present invention provides a process for rejuvenating a deactivated zeolite catalyst having a framework silica to alumina ratio of at least 20 and containing agglomerated noble metal in apparatus containing iron characterized by rejuvenating the catalyst with a stream of inert gas containing molecular chlorine at a partial pressure of 6 to 15 Torr and water in a concentration of

$$0.01 \_ \frac{p_{Water}}{p_{Chlorine}} \_ 2$$

where $p_{Water}$ is the partial pressure of water and $p_{Chlorine}$ is the partial pressure of chlorine at an elevated temperature to disperse the noble metal purging the catalyst with an inert gas; and then reducing the catalyst with dry hydrogen at conventional reductions conditions.

The present invention is useful in reactivating noble metal-containing zeolite catalysts which deactivate during hydrocarbon processing. When a catalyst loses activity, hydrocarbon feed flow is stopped. Preferably the reactor is purged of hydrocarbons with $H_2$ at 300 to $400°$ C and pressures from atmospheric to the operating pressure of the process.

The reactor may then be purged with an inert gas such as $N_2$ to remove $H_2$. Suitable purge conditions include temperatures of ambient to $400°$ C, and pressures used in the $H_2$ purge.

The catalyst is then oxidized to burn off carbonaceous deposits such as coke as well as nitrogen or sulfur compounds present. Preferably, these pretreatment steps are mild enough to prevent any alteration in the crystal structure of the zeolite being treated. At this point, $CO_2$ may be purged from the reactor.

The redispersion of agglomerated noble metals on the zeolite then may be carried out at 150 to $450°$ C, preferably 200 to $400°$ C. The zeolite is contacted with a stream of inert gas optionally containing oxygen, at a chlorine partial pressure $p_{Chlorine}$ of 6 to 15 Torr, and preferably 8 to 12 Torr, and water in a concentration of

$$0.01 \_ \frac{p_{Water}}{p_{Chlorine}} \_ 2, \text{ and preferably}$$

$$0.01 \_ \frac{p_{Water}}{p_{Chlorine}} \_ 1$$

wherein $p_{Water}$ is the partial pressure of water and $p_{Chlorine}$ is the partial pressure of chlorine for a period of time sufficient to effect redispersion of the noble metal. Contact time should be long enough to redisperse the agglomerated metal, preferably 1 to 10 hours, ideally 2 to 5 hours. Following redispersion the catalyst is purged with an inert gas such as nitrogen to remove residual oxygen (if present) and chlorine, and the

2

temperature is adjusted as necessary. The purging can be carried out simply by stopping the flow of oxygen and chlorine and can be continued until monitoring of the effluent shows no further removal of oxygen and chlorine. Other inert gases suitable for use in purging include helium and argon.

After purging, the catalyst is reduced in $H_2$, optionally, dry $H_2$, at 140 to 550°C. Preferred reduction conditions include final temperatures of 200 to 450°C, and pressures of atmospheric to 40 atmospheres. Reduction time should be long enough to reduce most of the metal on the support, preferably 1 to 5 hours.

The zeolites which can be rejuvenated by this process include large pore zeolites such as Zeolite Y, zeolite beta, ZSM-3, ZSM-4, ZSM-18, and ZSM-20, as well as medium pore zeolites such as ZSM-5, ZSM-11, ZSM-5/ZSM-11 intermediates, ZSM-12, ZSM-23, ZSM-35, ZSM-38, ZSM-48 and similar materials.

Zeolite Y is described in U.S. 3,130,007.

Zeolite beta is described in U.S. 3,308,069.

ZSM-3 is described in U.S. 3,415,736.

ZSM-4 is described in U.S. 4,021,447.

ZSM-5 is described in U.S. Nos. 3,702,886 and Re. 29,948.

ZSM-11 is described in U.S. No. 3,709,979.

ZSM-5/ZSM-11 intermediates are described in U.S. 4,229,424.

ZSM-12 is described in U.S. 3,832,449.

ZSM-18 is described in U.S. 3,950,496.

ZSM-20 is described in U.S. 3,972,983.

ZSM-23 is described in U.S. 4,076,842.

ZSM-35 is described in U.S. 4,016,245.

ZSM-38 is described in U.S. 4,046,859.

ZSM-48 is described in U.S. 4,234,231.

The catalyst must contain at least one noble metal such as platinum, palladium, iridium, osmium, rhodium, and ruthenium. These noble metals are generally associated with and supported on a zeolite catalyst. The process also works on multi metallic catalysts which contain at least one noble metal and another metal selected from Groups IB, IVB, VIA, or VII of the Periodic Table. The zeolite catalyst can be binder free or may contain an inorganic oxide binder such as alumina, silica, silica-alumina, magnesia, titania, zirconia, or thoria.

The following examples were carried out at atmospheric pressure.

Example 1 - Preparation of 0.6% Pt/Beta

An as-synthesized zeolite beta with a $SiO_2/Al_2O_3$ ratio of 30 was calcined in flowing $N_2$ at 500°C for 4 hours then in air at 500°C for 5 hours. The zeolite beta was then dealuminized to a $SiO_2/Al_2O_3$ ratio of 200 by acid extraction. Platinum was introduced into the dealuminized zeolite via ion exchange at room temperature, overnight, with $Pt(NH_3)_4(NO_3)_2$ at a ratio of 83:1 by weight. The platinum exchanged material was washed and oven dried followed by air calcination at 350°C for 2 hours.

Example 2 - Rejuvenation of Pt/Beta in the Presence of $H_2O$, Chlorine and Oxygen

15 grams of 0.6% platinum/zeolite beta prepared as in Example 1, was placed in a quartz reactor and heated to 450°C at 10°C per minute in a flow of nitrogen. Next, water, chlorine and oxygen were added into the inert gas stream for four hours at partial pressures of 18.6 (14), 16 (12), and 53.3 (40) mbar (Torr), respectively. After purging with $N_2$, the catalyst was reduced in flowing $H_2$ at 450°C for 1 hour. $H_2$ chemisoption was measured before and after treatment. As shown in Table 1 the platinum dispersion increased from 6 percent to 28 percent.

(Comparison) Example 3 - Rejuvenation of Pt/Beta in the Absence of $H_2O$

The procedure of Example 2 is repeated except under moisture free conditions and in a steel reactor. Moisture free conditions are achieved by pre-drying the $N_2$ and $O_2$ with 5 angstrom molecular sieve driers. $H_2$ chemisorption shows in Table 1, that platinum dispersion increases in the absence of $H_2O$. Moisture-free rejuvenation can leach iron, in the form of gaseous iron chloride, from the walls of the reactor offsetting the advantage of increased platinum dispersion. Iron is a poison for the zeolite catalysts.

## TABLE 1

### Platinum Dispersion

| | | Comparative | |
|---|---|---|---|
| | Example 2 | Example 3 | Example 4 |
| Catalyst | Pt/Beta | Pt/Beta | Pt/Beta |
| Initial dispersion, $D_h$ | 0.06 | 0.13 | 0.20 |
| Final dispersion, $D_h$ | 0.28 | 0.60 | 0.52 |
| $P_{H_2O}$, mbar (Torr) | 18.6 (14) | -- | -- |
| $P_{Cl_2}$, mbar (Torr) | 16 (12) | 16 (12) | 16 (12) |
| $P_{O_2}$, mbar (Torr) | 53.3 (40) | 53.3 (40) | -- |
| Vol. % $Cl_2$ | 0.4 | 0.4 | 0.4 |
| Temperature, °C | 450 | 450 | 450 |
| Total Pressure | 1.013 bar (1 atm) | 1.013 bar (1 atm) | 1.013 bar (1 atm) |

### Example 4

Conditions both outside those employed in the rejuvenating process herein, i.e., water is omitted, and within the rejuvenating process herein, i.e., with water present, were carried out in the presence of an iron sample to simulate what happens in commercial reactors. The effect of water on removing iron from the sample (as iron chloride) is evident in Table 2.

## TABLE 2

### Iron Loss (as Chloride)

#### Rejuvenating Conditions

| Run | $Cl_2$, mbar (Torr) | $O_2$, mbar (Torr) | $H_2O$, mbar (Torr) | Minutes | Sample Weight Loss, mg |
|---|---|---|---|---|---|
| 1 | 9.2 (6.9) | 0 | 0 | 60 | 162.42 |
| 2 | 9.2 (6.9) | 129.3 (97) | 0 | 60 | 95.42 |
| 3 | 9.2 (6.9) | 0 | 5.3 (4) | 60 | 0.58 |
| 4 | 9.2 (6.9) | 129.3 (97) | 5.3 (4) | 60 | -2.73 |

Runs 1 and 2 are comparison tests, i.e., the conditions are not within the scope of the invention. Runs 3 and 4 were run at conditions suitable for use in the invention.

The absence of water (Runs 1 and 2) caused much weight loss with the presence of oxygen (Run 2) having only limited mitigating effect. However, when water was present, sample weight loss was negligible (Run 3) or, in the presence of oxygen (Run 4), even increased slightly, probably due to formation of iron oxide.

Example 5

A 65/35 weight ratio zeolite beta/alumina binder with 0.62 wt% Pt having a hydrogen chemisorbtion (H/Pt) value of 1.42 and an x-ray diffraction (XRD) value of 3% was divided into two samples, A and B, each used in isomerization dewaxing for 21 days at which point significant coking (e.g., 15 to 20 percent by weight) was observed.

The XRD value is a measure of the percent platinum present that has agglomerated.

Coke-burnoff in oxygen resulted in agglomeration of the platinum in both samples. The H/Pt and XRD values were:

| Sample | H/Pt | XRD,% |
|--------|------|-------|
| A | 0.25 | 33 |
| B | 0.21 | 34 |

These data show considerable agglomeration of platinum.

Varying rejuvenation conditions were tried, with the results shown below:

| Sample | Rejuvenation Conditions | H/Pt | XRD,% |
|--------|-------------------------|------|-------|
| A | $Cl_2$ (10 Torr); $H_2O$ (50 Torr); $O_2$ (380 Torr); nitrogen at 450°C for 4 hrs | --- | 43 |
| B | $Cl_2$ (10 Torr); $H_2O$ (12 Torr); $O_2$ (380 Torr); nitrogen at 450°C for 4 hrs | 0.64 | 9 |

Too much water was used to rejuvenate Sample A. The excess water aggravates the agglomeration of platinum.

Example 6

A 65/35 zeolite beta/alumina catalyst containing 0.58 wt % Pt contacted feed for 21 days. The coked catalyst was given an oxygen burnoff treatment at 454°C (850°F) resulting in agglomeration of the platinum. The H/Pt and XRD values were measured after burnoff and after rejuvenation as follows:

| Rejuvenation Condition | H/Pt After Burnoff | After Rejuvenation | XRD,% After Burnoff | After Rejuvenation |
|---|---|---|---|---|
| $Cl_2$ (10 Torr); $H_2O$ (10 Torr); $O_2$ (580 Torr); nitrogen at 450°C for 4 hrs | 0.33 | 0.49 | 21 | 11 |

These data show the beneficial effect on carrying out rejuvenation with a partial pressure of water within the range of the invention.

Examples 7-9

The XRD values of the following catalyst samples were measured as follows:

| Example | Wt % Pt | Zeolite/Binder Ratio | Original XRD |
|---|---|---|---|
| 7 | 0.66 | 65/35 (alumina) | 0 |
| 8 | 0.58 | 65/35 (alumina) | 0 |
| 9 | 0.50 | 80/20 (silica) | 0 |

The XRD values of these zeolites following treatment(s) to agglomerate platinum were as follows:

| Example | Agglomerating Treatment | XRD,% Following Agglomeration |
|---|---|---|
| 7 | Air sintering at 530°C for 24 hrs | 27 |
| 8 | Coke burnoff | 9 |
| 9 | Real Feed Test (21 days) followed by coke burnoff and a repeat of these operations | 42 |

Rejuvenation was carried out on the agglomerated zeolites (with Example 7 being divided in two samples, 7A and 7B) and their XRD values were measured as follows:

| Example | Agglomerating Treatment | XRD % Before | XRD % After | Observation |
|---|---|---|---|---|
| 7A | $Cl_2$ (10 Torr) [13.3 mbar]; $H_2O$ (10 Torr) [13.3 mbar]; $O_2$ (580 Torr) [566.5 mbar]; nitrogen at 450°C for 4 hrs | 27 | 7 | Substantial redispersion of platinum. |
| 7B | $Cl_2$ (5 Torr) [6.7 mbar]; $H_2O$ (10 Torr) [13.3 mbar]; $O_2$ (580 Torr) [566.5 mbar]; nitrogen at 450°C for 4 hrs | 27 | 30 | Agglomeration somewhat aggravated; partial pressure of $Cl_2$ too low. |
| 8 | First Conditions: $Cl_2$ (12 Torr) [16 mbar]; $H_2O$ (27 Torr) [36 mbar]; $O_2$ (585 Torr) [512.2]; nitrogen at 450°C for 2 hrs | 9 | 40 | HCl increases agglomeration. |
| 8 | Second Conditions: $Cl_2$ (6 Torr) [8 mbar]; $H_2O$ (39 Torr) [52 mbar]; $O_2$ (588 Torr) [512.2]; nitrogen at 450°C for 2 hrs | 9 | 58 | Partial pressure of water exceeding maximum level increases agglomeration. |
| 9 | $Cl_2$ (10 Torr) [13.3 mbar]; $H_2O$ (11 Torr) [14.7 mbar]; $O_2$ (580 Torr) [566.5 mbar]; nitrogen at 450°C for 4 hrs | 42 | 31 | Significant redispersion of platinum observed. |

In Example 7A above, the rejuvenation treatment restored a catalyst with a 27% XRD Pt to a 7% XRD, indicating substantial redispersion of platinum.

In Example 9, the 31% XRD after treatment seems high but it is an improvement over the 42% XRD of the starting catalyst.

**Claims**

1. A process for rejuvenating a deactivated zeolite catalyst having a framework silica to alumina ratio of at least 20 and containing agglomerated noble metal in apparatus containing iron characterised by rejuvenating the catalyst with a stream of inert gas containing molecular chlorine at a partial pressure of 8 to 20 mbar (6 to 15 Torr) and water the ratio of water partial pressure to chlorine partial pressure being 0.01 to 2, at an elevated temperature to disperse the noble metal, purging the catalyst with an inert gas, and then reducing the catalyst with dry hydrogen at conventional reduction conditions.

2. The process of claim 1 further characterised in that the rejuvenation temperature is 150 to 450°C.

3. The process of claim 1 further characterised in that oxygen is present in the inert gas during rejuvenation.

4. The process of claim 3 further characterised in that the partial pressure of oxygen is 66.7 to 666.5 mbar (50 to 500 Torr).

5. The process of claim 4 further characterised in that the partial pressure of oxygen is 133.3 to 533.2 mbar (100 to 400 Torr).

6. The process of any preceding claim further characterised in that the partial pressure of chlorine during rejuvenation is 10.7 to 16 mbar (8 to 12 Torr).

7. The process of any preceding claim further characterised in that the ratio of water partial pressure to chlorine partial pressure is 0.1 to 1.

## Revendications

1. Un procédé pour régénérer un catalyseur désactivé à base de zéolite dont le réseau présente un rapport de silice à alumine d'au moins 20 et contenant un métal noble aggloméré, dans un réacteur contenant du fer, caractérisé en ce que le catalyseur est régénéré avec un courant de gaz inerte contenant du chlore moléculaire à une pression partielle de 6 à 15 Torr et de l'eau, le rapport de la pression partielle d'eau à la pression partielle du chlore étant de 0,01 à 2, à une température élevée pour disperser le métal noble, le catalyseur est purgé avec un gaz inerte, et ensuite le catalyseur est réduit avec de l'hydrogène anhydre dans des conditions de réduction classiques.

2. Le procédé suivant la revendication 1, caractérisé de plus en ce que la température de régénération est de 150 à 450°C.

3. Le procédé suivant la revendication 1, caractérisé de plus en ce que de l'oxygène est présent dans le gaz inerte pendant la régénération.

4. Le procédé suivant la revendication 3, caractérisé de plus en ce que la pression partielle d'oxygène est de 50 à 500 Torr.

5. Le procédé suivant la revendication 4, caractérisé de plus en ce que la pression partielle d'oxygène est de 100 à 400 Torr.

6. Le procédé suivant l'une quelconque des revendications précédentes, caractérisé de plus en ce que la pression partielle de chlore pendant la régénération est de 8 à 12 Torr.

7. Le procédé suivant l'une quelconque des revendications précédentes, caractérisé de plus en ce que le rapport de la pression partielle d'eau à la pression partielle de chlore est de 0,1 à 1.

## Patentansprüche

1. Verfahren zu Regenerierung eines deaktivierten Zeolithkatalysators mit einem Silicumdioxid/Aluminiumoxid-Gitterverhältnis von mindestens 20, der agglomeriertes Edelmetall enthält, in einer Eisen enthaltenden Vorrichtung, gekennzeichnet durch Regenerierung des Katalysators mit einem Inertgasstrom, der molekulares Chlor enthält bei einem Partialdruck von 6 bis 15 Torr und mit Wasser, wobei das Verhältnis des Partialdrucks des Wassers zum Partialdruck des Chlors 0.01 bis 2 beträgt, bei einer erhöhten Temperatur, um das Edelmetall zu dispergieren, Spülen des Katalysators mit einem Inertgas und anschließende Reduzierung des Katalysators mit trockenem Wasserstoff bei üblichen Reduzierungsbedingungen.

2. Verfahren nach Anspruch 1, das außerdem dadurch gekennzeichnet ist, daß die Regenerierungstemperatur 150 bis 450° C beträgt.

3. Verfahren nach Anspruch 1, das außerdem dadurch gekennzeichnet ist, daß während der Regenerierung im Inertgas Sauerstoff vorhanden ist.

4. Verfahren nach Anspruch 3, das weiterhin dadurch gekennzeichnet ist, daß der Partialdruck des Sauerstoffs 50 bis 500 Torr beträgt.

5. Verfahren nach Anspruch 4, das weiterhin dadurch gekennzeichnet ist, daß der Partialdruck des Sauerstoffs 100 bis 400 Torr beträgt.

6. Verfahren nach einem der vorstehenden Ansprüche, das weiterhin dadurch gekennzeichnet ist, daß der Partialdruck des Chlors während der Regenerierung 8 bis 12 Torr beträgt.

7. Verfahren nach einem der vorstehenden Ansprüche, das weiterhin dadurch gekennzeichnet ist, daß das Verhältnis des Partialdrucks des Wassers zum Partialdruck des Chlors 0,1 bis 1 beträgt.